# EUROPEAN PATENT APPLICATION

(11) **EP 2 026 333 A1**
(43) Date of publication of application: **18.02.2009**
(21) Application number: 08160807.7
(22) Date of filing: 21.07.2008
(51) Int. Cl.: G11B 5/48, G11B 7/12, G11B 11/105

(54) **Suspension board with circuit**

(30) Priority: 31.07.2007 JP 2007199997
(71) Applicant: Nitto Denko Corporation, Ibaraki-shi, Osaka 567-8680 (JP)
(72) Inventor: Khan, Sazzadur Rahman c/o Nitto Denko Corporation, Osaka 567-8680 (JP)
(74) Representative: Schwabe - Sandmair - Marx

(57) **Abstract**

A suspension board with circuit includes a metal supporting board, an insulating base layer formed on the metal supporting board, a conductive pattern formed on the insulating base layer, an insulating cover layer formed on the insulating base layer so as to cover the conductive pattern, and an optical waveguide including a core layer having a curved portion and a metal thin film covering a surface of the curved portion.

## Description

### BACKGROUND OF THE INVENTION

### Field of the Invention

The present invention relates to a suspension board with circuit and, more particularly, to a suspension board with circuit mounted on a hard disk drive or the like adopting an optically assisted method.

### Description of the Related Art

In recent years, as a method of magnetic recording to a hard disk or the like, an optically assisted method (optically assisted magnetic recording method) has been known, which enables high-density information recording with a small recording magnetic field by heating the hard disk with light radiation during recording of information to lower the coersive force thereof, and then recording the information to the hard disk having the lower coersive force with a magnetic head.

For example, it has been proposed that, in an optically assisted magnetic recording apparatus adopting the optically assisted method, a magnetic recording/reproducing device is provided by forming a magnetic reproducing device and magnetic recording device (magnetic head), an optical waveguide, and a light source on a side surface of a head slider, and the head slider is supported on a suspension (see, e.g., Japanese Unexamined Patent No. 2000-195002).

### SUMMARY OF THE INVENTION

However, because the head slider is formed relatively small to respond to a request for size reduction, and the magnetic head is also provided, it is difficult to dispose other components in terms of space. Therefore, when the optical waveguide and the light source, each used in the optically assisted method, are to be provided in the head slider together with the magnetic head, a problem arises such as layout restrictions, troublesome production process, and increase in production cost.

Moreover, when the optical waveguide has a curved portion under such layout restrictions, an optical signal travels straight without curving along the curved portion, and easily leaks. This leads to a problem that the optical signal is difficult to be transmitted in an amount of light necessary for the optically assisted method.

It is therefore an object of the present invention to provide a suspension board with circuit which can adopt an optically assisted method, but can also ensure design flexibility, improve production efficiency, reduce production cost, and further prevent the leakage of an optical signal.

A suspension board with circuit according to the present invention includes a metal supporting board, an insulating base layer formed on the metal supporting board, a conductive pattern formed on the insulating base layer, an insulating cover layer formed on the insulating base layer so as to cover the conductive pattern, and an optical waveguide including a core layer having a curved portion and a metal thin film covering a surface of the curved portion.

In the suspension board with circuit according to the present invention, it is preferable that the metal thin film covers an upper surface and a side surface of the curved portion.

In the suspension board with circuit according to the present invention, it is preferable that the metal thin film is made of silver.

In the suspension board with circuit according to the present invention, the optical waveguide used in an optically assisted method can be formed with a higher spatial margin than that in a head slider. As a result, it is possible to ensure design flexibility, improve production efficiency, and reduce production cost.

In addition, since the surface of the curved portion is coated with the metal thin film, an optical signal is reflected by the metal thin film in the curved portion and transmitted along the curved portion, while being confined in the core layer. As a result, it is possible to prevent the leakage of the optical signal at the curved portion and transmit the optical signal in an amount of light necessary for the optically assisted method.

### BRIEF DESCRIPTION OF THE DRAWINGS

FIG. 1 is a plan view showing a suspension board with circuit according to an embodiment of the present invention;
FIG. 2 is a cross-sectional view of the suspension board with circuit shown in FIG. 1 along an optical waveguide;
FIG. 3 is a cross-sectional view of a wiring portion of the suspension board with circuit shown in FIG. 1 along a widthwise direction, including a left-side view corresponding to a cross-sectional view in a curved portion, and a right-side view corresponding to a cross-sectional view in a linear portion;
FIG. 4 is a cross-sectional view showing the steps of producing the suspension board with circuit shown in FIG. 3, including a left-side view corresponding to a cross-sectional view of the curved portion in the wiring portion along the widthwise direction, which corresponds to the left-side view of FIG. 3, and a right-side view corresponding to an enlarged cross-sectional view in a terminal formation portion along a longitudinal direction,
   (a) showing the step of preparing a metal supporting board,
   (b) showing the step of forming an insulating base layer, serving also as an underclad layer, on the metal supporting board,
   (c) showing the step of forming a conductive pattern on the insulating base layer, and
   (d) showing the step of forming a core layer on the insulating base layer;

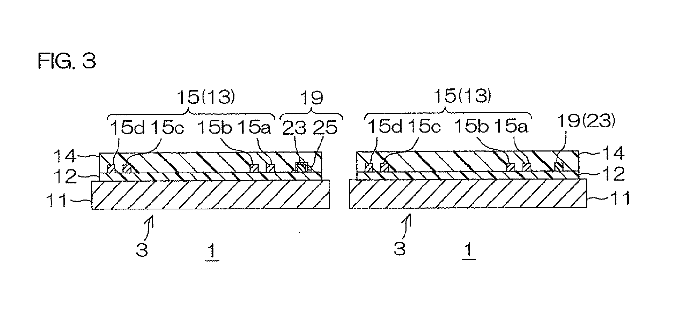

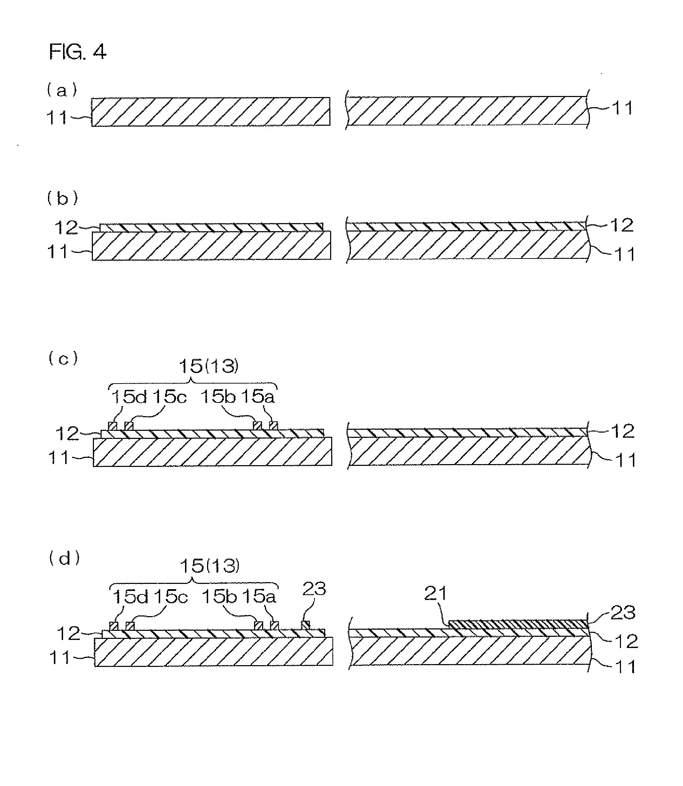

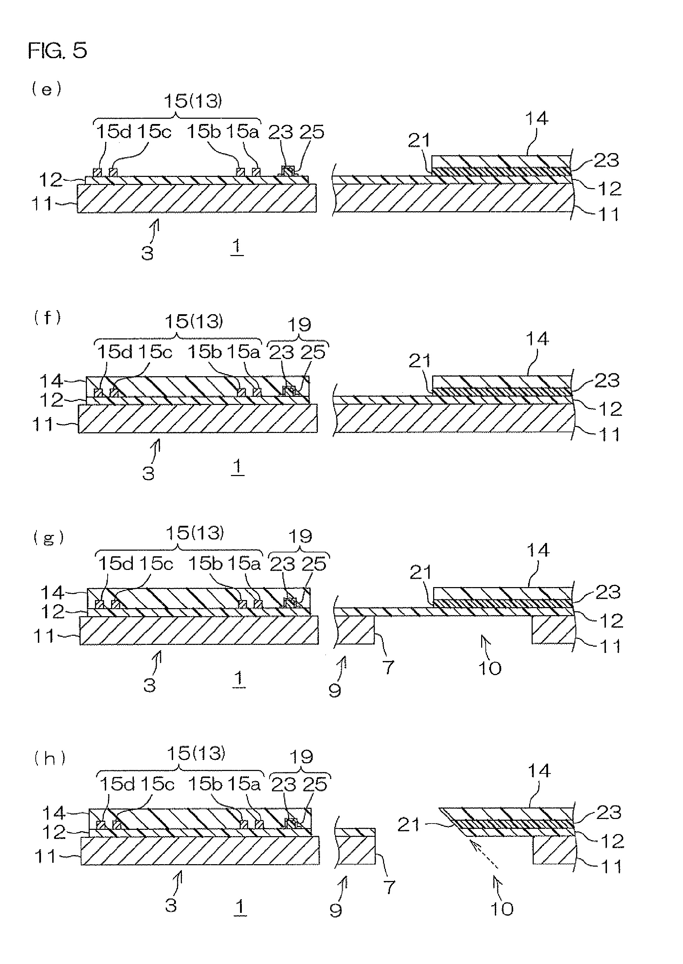

FIG. 5 is a cross-sectional view showing the steps of producing the suspension board with circuit shown in FIG. 3, subsequently to FIG. 4, including a left-side view corresponding to a cross-sectional view of the curved portion in the wiring portion along the widthwise direction, which corresponds to the left-side view of FIG. 3, and a right-side view corresponding to an enlarged cross-sectional view in the terminal formation portion along the longitudinal direction,
   (e) showing the step of forming a metal thin film so as to cover the surface of a core layer in the curved portion,
   (f) showing the step of forming an insulating cover layer, serving also as an overclad layer, on the insulating base layer,
   (g) showing the step of forming an opening in the metal supporting board in the terminal formation portion, and
   (h) showing the step of cutting the respective front end portions of the insulating base layer, the core layer, and the insulating cover layer by laser processing such that the end surface of the front end portion of the core layer intersects the longitudinal direction;

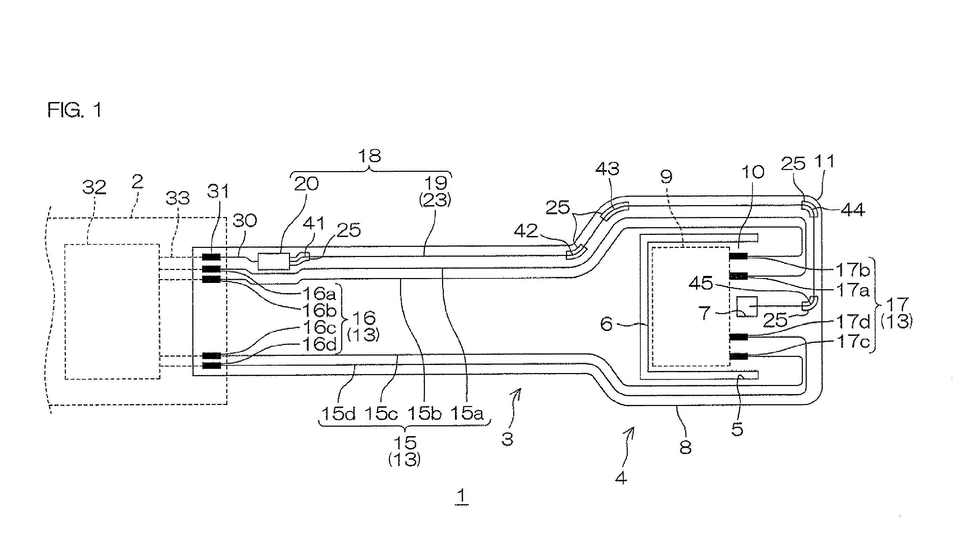

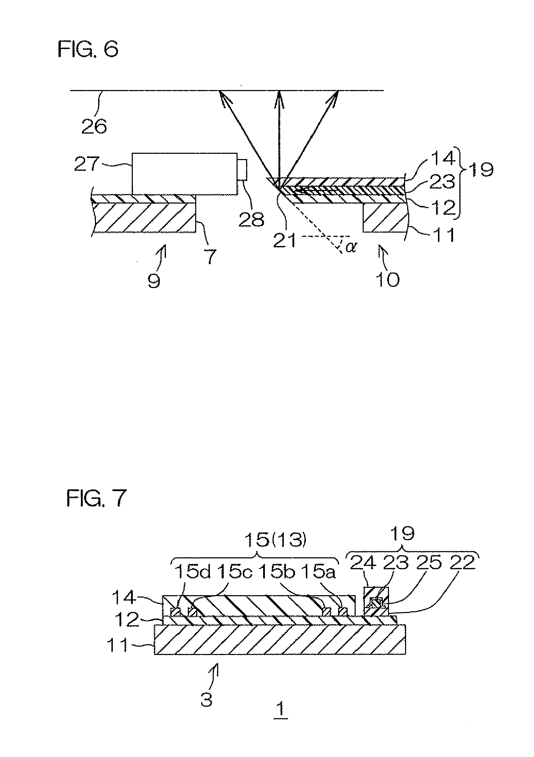

FIG. 6 is a view illustrating a state where a hard disk drive in which a head slider, a magnetic head, and the suspension board with circuit shown in FIG. 1 are mounted records information to a hard disk using an optically assisted method;
FIG. 7 is a cross-sectional view of the curved portion in the wiring portion of the suspension board with circuit shown in FIG. 1 along the widthwise direction, which is a cross-sectional view of an embodiment in which the optical waveguide is provided on the insulating base layer;

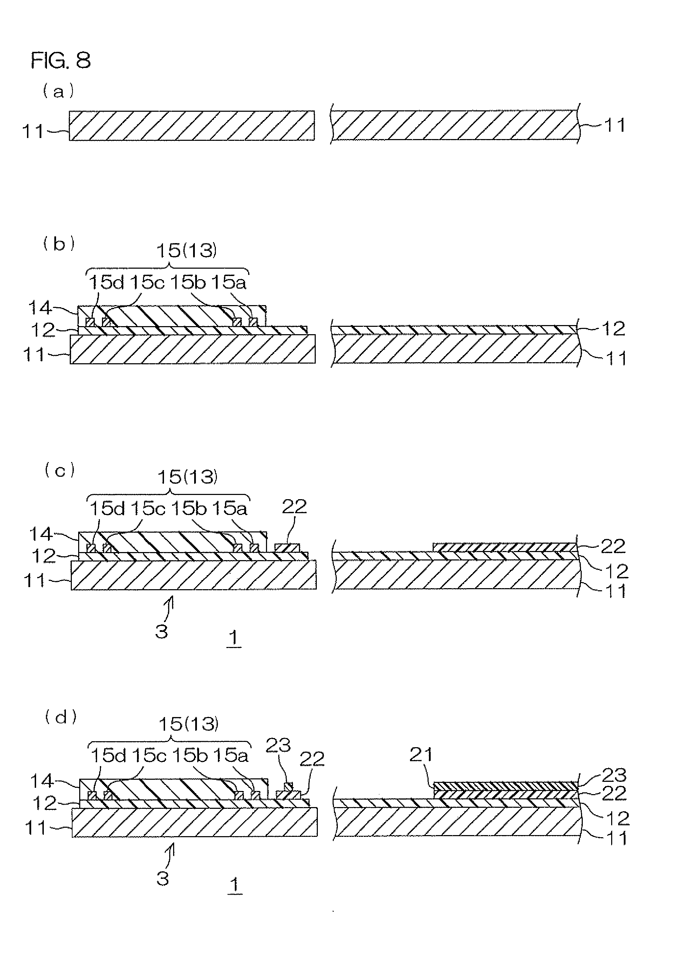

FIG. 8 is a cross-sectional view showing the steps of producing the suspension board with circuit shown in FIG. 7, including a left-side view corresponding to a cross-sectional view of the curved portion in the wiring portion along the widthwise direction, which corresponds to FIG. 7, and a right-side view corresponding to an enlarged cross-sectional view in the terminal formation portion along the longitudinal direction,
   (a) showing the step of preparing the metal supporting board,
   (b) showing the step of successively laminating the insulating base layer, the conductive pattern, and the insulating cover layer on the metal supporting board,
   (c) showing the step of forming the underclad layer on the insulating base layer, and
   (d) showing the step of forming the core layer on the underclad layer;

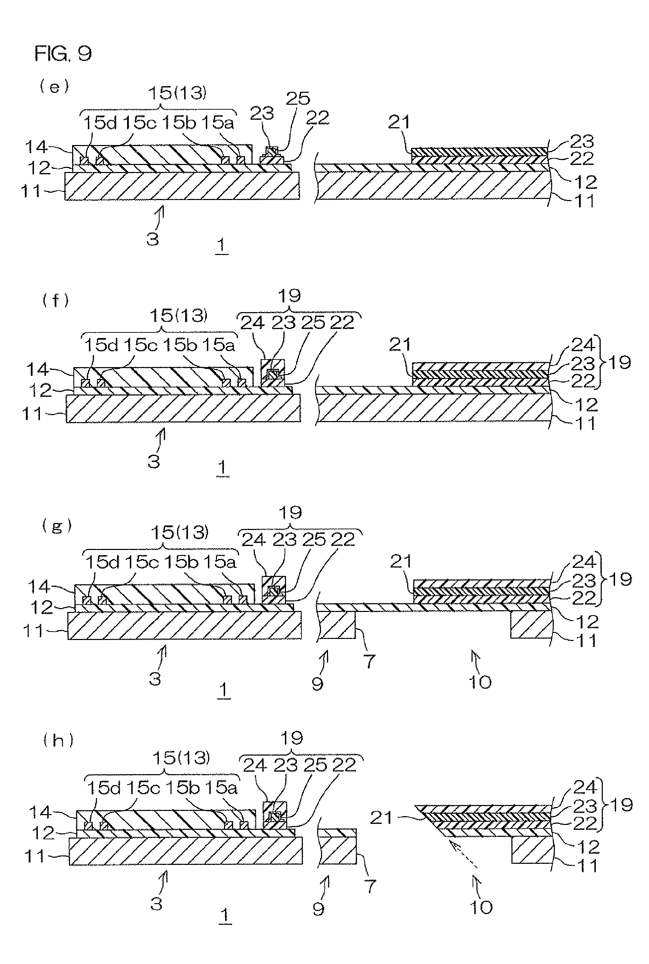

FIG. 9 is a cross-sectional view showing the steps of producing the suspension board with circuit shown in FIG. 7, subsequently to FIG. 8, including a left-side view corresponding to a cross-sectional view of the curved portion in the wiring portion along the widthwise direction, which corresponds to FIG. 7, and a right-side view corresponding to an enlarged cross-sectional view in the terminal formation portion along the longitudinal direction,
   (e) showing the step of forming the metal thin film so as to cover the surface of the core layer in the curved portion,
   (f) showing the step of forming the overclad layer on the underclad layer so as to cover the metal thin film,
   (g) showing the step of forming an opening in the metal supporting board in the terminal formation portion, and
   (h) showing the step of cutting the respective front end portions of the insulating base layer and the optical waveguide by laser processing such that the end surface of the front end portion of the optical waveguide intersects the longitudinal direction;

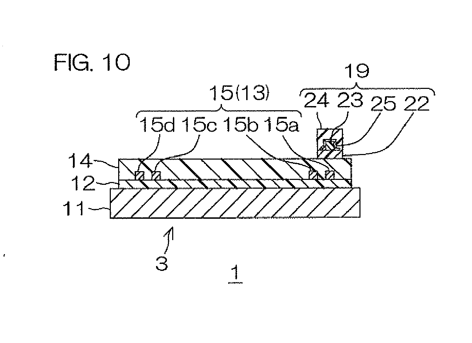

FIG. 10 is a cross-sectional view of the curved portion in the wiring portion of the suspension board with circuit shown in FIG. 1 along the widthwise direction, which is a cross-sectional view of an embodiment in which the optical waveguide is provided on the insulating cover layer;

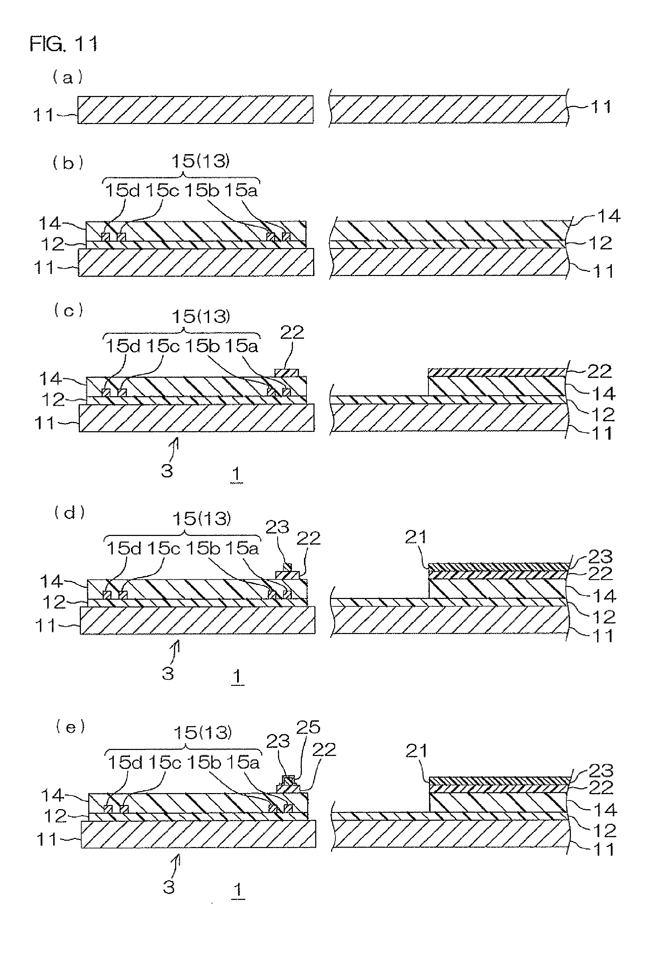

FIG. 11 is a cross-sectional view showing the steps of producing the suspension board with circuit shown in FIG. 10, including a left-side view corresponding to a cross-sectional view of the curved portion in the wiring portion along the widthwise direction, which corresponds to FIG. 10, and a right-side view corresponding to an enlarged cross-sectional view in the terminal formation portion along the longitudinal direction,
   (a) showing the step of preparing the metal supporting board,
   (b) showing the step of successively laminating the insulating base layer, the conductive pattern, and the insulating cover layer on the metal supporting board,
   (c) showing the step of forming the underclad layer on the insulating cover layer,
   (d) showing the step of forming the core layer on the underclad layer, and
   (e) showing the step of forming the metal thin film so as to cover the surface of the core layer in the curved portion; and

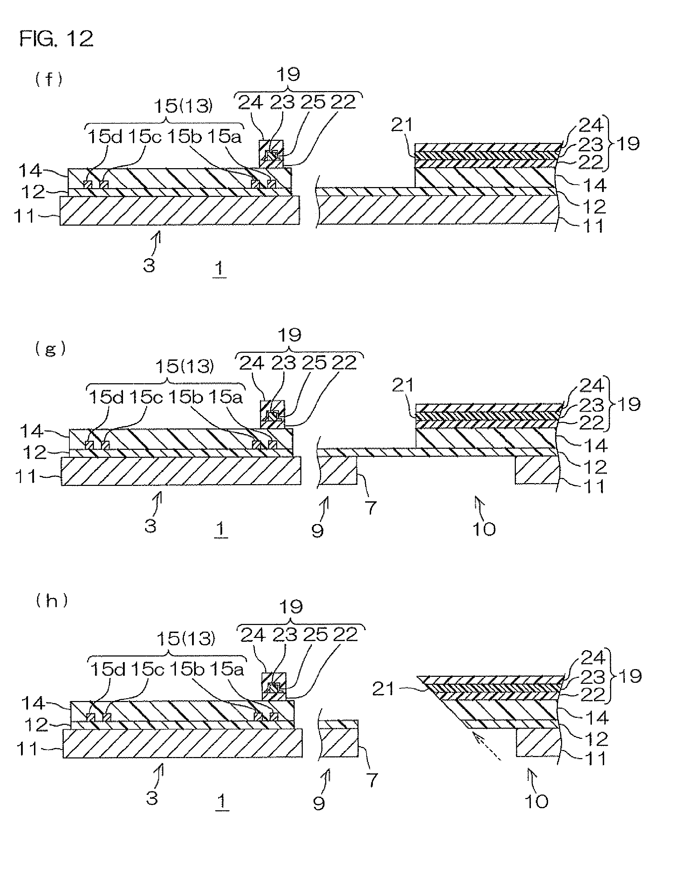

FIG. 12 is a cross-sectional view showing the steps of producing the suspension board with circuit shown in FIG. 10, subsequently to FIG. 11, including a left-side view corresponding to a cross-sectional view of the curved portion in the wiring portion along the widthwise direction, which corresponds to FIG. 10, and a right-side view corresponding to an enlarged cross-sectional view in the terminal formation portion along the longitudinal direction,
   (f) showing the step of forming the overclad layer on the underclad layer so as to cover the metal thin film,
   (g) showing the step of forming an opening in the metal supporting board in the terminal formation portion, and
   (h) showing the step of cutting the insulating base layer, the insulating cover layer, and the optical waveguide by laser processing such that the end surface of the front end portion of the optical waveguide intersects the longitudinal direction.

### DETAILED DESCRIPTION OF THE INVENTION

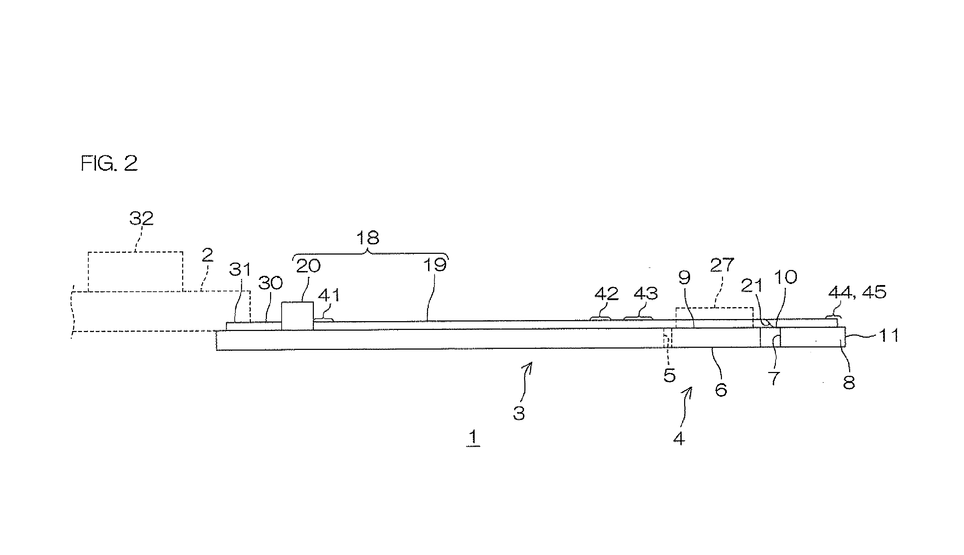

FIG. 1 is a plan view showing a suspension board with circuit according to an embodiment of the present invention. FIG. 2 is a cross-sectional view of the suspension board with circuit shown in FIG. 1 along an optical waveguide. FIG. 3 is a cross-sectional view of the suspension board with circuit shown in FIG. 1 in a wiring portion along a direction (hereinafter referred to as a widthwise direction) perpendicular to a longitudinal direction, including a left-side view corresponding to a cross-sectional view in a curved portion, and a right-side view corresponding to a cross-sectional view in a linear portion. In FIGS. 1 and 2, an insulating base layer 12 and an insulating cover layer 14 are omitted.

In FIG. 1, a suspension board with circuit 1 includes a metal supporting board 11 on which a magnetic head 28 (see FIG. 6) of a hard disk drive is mounted, and a conductive pattern 13 formed integrally on the metal supporting board 11 to connect the magnetic head 28 to an external circuit board (e.g., a read/write board) 2. The metal supporting board 11 supports the magnetic head 28, while holding a minute gap between the magnetic head 28 and a hard disk 26 (see FIG. 6), against an air flow when the magnetic head 28 and the hard disk 26 travel relatively to each other.

The suspension board with circuit 1 is formed in a flat belt shape extending in the longitudinal direction, and integrally includes a wiring portion 3 disposed on one longitudinal side (hereinafter referred to as a rear side), and a gimbal portion 4 disposed on the other longitudinal side (hereinafter referred to as a front side).

The wiring portion 3 is formed in a generally rectangular shape extending in the longitudinal direction when viewed in plan view.

The gimbal portion 4 is formed continuously from the front end of the wiring portion 3 to have a generally rectangular shape protruding to both outsides of the wiring portion 3 in the widthwise direction when viewed in plan view. The gimbal portion 4 is formed with slit portion 5 in a generally U-shaped shape which is opened toward the front side when viewed in plan view. The gimbal portion 4 also integrally includes a tongue portion 6 sandwiched by the slit portion 5 in the widthwise direction and an outrigger portion 8 disposed on both widthwise outsides of the slit portion 5 and on the front end side of the tongue portion 6.

The tongue portion 6 is formed in a generally rectangular shape when viewed in plan view, and includes a mounting portion 9 and a terminal formation portion 10.

The mounting portion 9 is a region for mounting a head slider 27, which is disposed on the rear side of the tongue portion 6, and formed in a generally rectangular shape when viewed in plan view.

The terminal formation portion 10 is a region formed with magnetic-head-side connection terminal portions 17, described later, and is disposed on the front side of the mounting portion 9. The terminal formation portion 10 is formed with an opening 7 in a generally rectangular shape when viewed in plan view.

The opening 7 is formed in a generally rectangular shape when viewed in plan view so as to extend through the metal supporting board 11 in a thickness direction. The opening 7 is formed at a widthwise center in the terminal formation portion 10 to be adjacent to the mounting portion 9.

The conductive pattern 13 integrally and continuously includes external connection terminal portions 16, the magnetic-head-side connection terminal portions 17, and signal wires 15 for connecting the external connection terminal portions 16 and the magnetic-head-side connection terminal portions 17.

The plurality of (four) signal wires 15 are provided along the longitudinal direction of the suspension board with circuit 1, and arranged in parallel and widthwise mutually spaced-apart relation.

The plurality of signal wires 15 are formed of a first wire 15a, a second wire 15b, a third wire 15c, and a fourth wire 15d. The first wire 15a, the second wires 15b, the third wire 15c, and the fourth wire 15d are arranged in this order from one widthwise side toward the other widthwise side.

More specifically, the first wire 15a, the second wire 15b, the third wire 15c, and the fourth wire 15d are formed to extend in mutually parallel relation in the wiring portion 3. In the gimbal portion 4, the first wire 15a and the second wire 15b are arranged on one widthwise side of the outrigger portion 8 to be parallel with one widthwise side end edge thereof, while the third wire 15c and the fourth wire 15d are arranged on the other widthwise side of the outrigger portion 8 to be parallel with the other widthwise end edge thereof. The first wire 15a, the second wire 15b, the third wire 15c, and the fourth wire 15d are curved widthwise inwardly after reaching the front-end side of the outrigger portion 8 to extend widthwise inwardly, then, further curved back toward the rear side to reach the front end portions of the magnetic-head-side connection terminal portions 17.

In the wiring portion 3, the first wire 15a and the second wire 15b are arranged to widthwise inwardly bypass a light emitting device 20, described later.

The plurality of (four) external connection terminal portions 16 are provided and arranged at the rear end portion of the wiring portion 3 so as to be connected to the respective rear end portions of the individual wires 15. The external connection terminal portions 16 are arranged in widthwise mutually spaced-apart relation. The external connection terminal portions 16 include a first external connection terminal portion 16a, a second external connection terminal portion 16b, a third external connection terminal portion 16c, and a fourth external connection terminal portion 16d, which are arranged in this order from one widthwise side toward the other widthwise side to correspond to the first wire 15a, the second wire 15b, the third wire 15c, and the fourth wire 15d, respectively, that are connected to the external connection terminal portions 16. The external connection terminal portions 16 are connected to terminal portions, not shown, on the external circuit board 2 indicated by the broken line.

The magnetic-head-side connection terminal portions 17 are arranged in the gimbal portion 4. More specifically, the magnetic-head-side connection terminal portions 17 are arranged at the rear end portion of the terminal formation portion 10 of the tongue portion 6. The plurality of (four) magnetic-head-side connection terminal portions 17 are provided so as to be connected to the respective front end portions of the individual signal wires 15.

More specifically, the magnetic-head-side connection terminal portions 17 are arranged in widthwise mutually spaced-apart relation along the rear end edge (front end edge of the mounting portion 9) of the terminal formation portion 10. The magnetic-head-side connection terminal portions 17 include a second magnetic-head-side connection terminal portion 17b, a first magnetic-head-side connection terminal portion 17a, a third magnetic-head-side connection terminal portion 17c, and a fourth magnetic-head-side connection terminal portion 17d, which are arranged in this order from one widthwise side toward the other widthwise side to correspond to the second wire 15b, the first wire 15a, the third wire 15c, and the fourth wire 15d, respectively, that are connected thereto. The magnetic-head-side connection terminal portions 17 are connected to terminal portions, not shown, on the magnetic head 28.

As shown in FIG. 3, the suspension board with circuit 1 includes the metal supporting board 11, the insulating base layer 12 formed on the metal supporting board 11, the conductive pattern 13 formed on the insulating base layer 12, and the insulating cover layer 14 formed on the insulating base layer 12 so as to cover the conductive pattern 13.

As shown in FIGS. 1 and 3, the metal supporting board 11 is formed correspondingly to the outer shape of the suspension board with circuit 1.

The insulating base layer 12 is formed correspondingly to the respective positions in the wiring portion 3 and the gimbal portion 4 where the conductive pattern 13 and a core layer 23 (described later) are formed so as to expose the peripheral end edges of the metal supporting board 1. More specifically, the insulating base layer 12 is formed in a flat belt shape which is slightly shorter than the metal supporting board 11 in the longitudinal direction and the widthwise direction.

The conductive pattern 13 is disposed over the wiring portion 3 and the gimbal portion 4, and is formed as a wired circuit pattern integrally and continuously including the external connection terminal portions 16, the magnetic-head-side connection terminal portions 17, and the signal wires 15. The conductive pattern 13 is disposed on the insulating base layer 12 so as to ensure the region to be formed with the core layer 23, described later.

The insulating cover layer 14 is disposed over the wiring portion 3 and the gimbal portion 4 to correspond to the respective positions where the signal wires 15 and the core layer 23 are formed. The insulating cover layer 14 is formed so as to expose the external connection terminal portions 16 and the magnetic-head-side connection terminal portions 17, and cover the signal wires 15 and the core layer 23.

As shown in FIG. 1, the suspension board with circuit 1 includes an optically assisted portion 18 used in an optically assisted method.

The optically assisted portion 18 includes an optical waveguide 19 and the light emitting device 20.

The optical waveguide 19 is disposed over the wiring portion 3 and the gimbal portion 4 along the direction in which the conductive pattern 13 extends.

More specifically, the optical waveguide 19 is disposed on one widthwise side of the wiring portion 3, i.e., to be spaced apart from the first wire 15a on the widthwise outermost side, and extend in parallel with the first wire 15a. The optical waveguide 19 is disposed on one widthwise side and the front end side of the outrigger portion 8, and in the terminal formation portion 10 so as to be spaced apart from the first wire 15a and located on the opposite side of the second wire 15b with respect to the first wire 15a, and extends in parallel with the first wire 15a. That is, the optical waveguide 19 extends in parallel with the first wire 15a, turns back at the front end side of the outrigger portion 8 toward the rear side, and then extends along the widthwise center of the gimbal portion 4 to reach the opening 7.

More specifically, the optical waveguide 19 includes a plurality of linear portions and five curved portions (a first curved portion 41, a second curved portion 42, a third curved portion 43, a fourth curved portion 44, and a fifth curved portion 45) provided between the linear portions, which are lined from the light emitting device 20 to the opening 7.

The first curved portion 41 is disposed in front of the light emitting device 20 at the rear end of the wiring portion 3 to be adjacent to the light emitting device 20. The first curved portion 41 is formed to be gradually curved toward one widthwise side (outer side) as it extends forward. More specifically, the first curved portion 41 is curved in a generally S-shaped curvature protruding toward the other widthwise side (inner side).

The second curved portion 42 is disposed at generally the same widthwise position as the first curved portion 41 so as to extend between the wiring portion 3 and the gimbal portion 4. The second curved portion 42 is formed to be curved toward one widthwise side (outer side) as it extends forward. More specifically, the second curved portion 42 is curved in a generally S-shaped curvature protruding toward the other widthwise side (inner side).

The third curved portion 43 is disposed at the rear end and on one widthwise side (outer side) of the outrigger portion 8 to be located in front of and on one widthwise side of the second curved portion 42. The third curved portion 43 is formed to be curved toward the other widthwise side (inner side) as it extends rearward. More specifically, the third curved portion 43 is curved in a generally S-shaped curvature protruding toward one widthwise side (outer side).

The fourth curved portion 44 is disposed at the front end and on one widthwise side (outer side) of the outrigger portion 8 to be at generally the same widthwise position as the third curved portion 43. The fourth curved portion 44 is formed to be curved toward the other widthwise side (inner side) from the linear portion extending from the third curved portion 43 toward the front end. More specifically, the fourth curved portion 44 is curved in a generally L-shaped curvature having a corner toward a direction between one widthwise side (outer side) and the front end side.

The fifth curved portion 45 is disposed at the front end and at the widthwise center of the outrigger portion 8 to be located at generally the same longitudinal position as the fourth curved portion 44. The fifth curved portion 45 is formed to be curved toward the rear side from the linear portion extending from the fourth curved portion 44 toward the other widthwise side (inner side). More specifically, the fifth curved portion 45 is curved in a generally L-shaped curvature having a corner toward a direction between the other widthwise side and the front end side.

The optical waveguide 19 is optically connected to the light emitting device 20. More specifically, the optical waveguide 19 is formed such that the rear end thereof (the rear end of the first curved portion 41) is connected to the light emitting device 20 and the front end thereof faces the opening 7.

The light emitting device 20 is a light source for emitting light to be incident on the optical waveguide 19. For example, the light emitting device 20 is a light source which converts electric energy to optical energy to emit high-energy light. The light emitting device 20 is disposed at the rear end side of the metal supporting board 11. More specifically, the light emitting device 20 is disposed at the rear end side of the wiring portion 3 to be spaced apart from the external connection terminal portions 16 on the front end side, and is also disposed to be spaced apart from the signal wire 15 (first wire 15a) on one widthwise side. The light emitting device 20 is formed on the insulating base layer 12.

The light emitting device 20 is connected to a supply wire 30 for supplying electric energy thereto. The supply wire 30 is connected to a supply terminal portion 31 to be connected to a terminal portion, not shown, on the external circuit board 2. The supply wire 30 extends along the signal wire 15 (first wire 15a) at the rear end side of the light emitting device 2. The supply terminal portion 31 is disposed to be spaced apart from the external connection terminal portion 16 (first external connection terminal portion 16a) on one widthwise side. The supply wire 30 is covered with the insulating cover layer 14, while the supply terminal portion 31 is exposed from the insulating cover layer 14.

In the optically assisted portion 18, the electric energy supplied from the external circuit board 2 via the supply terminal portion 31 and the supply wire 30 is converted to optical energy in the light emitting device 20 so that the resulting light is emitted to the optical waveguide 19. The emitted light passes through the optical waveguide 19, and is reflected at an end surface 21, described next, to irradiate the hard disk 26.

As shown in FIG. 6, the optical waveguide 19 is formed such that, e.g., the end surface 21 at the front end portion thereof intersects the longitudinal direction of the optical waveguide 19 at a predetermined angle (tilt angle) α. As a result, the optical waveguide 19 is formed to have the end surface 21 thereof serving as a mirror surface having the tilt angle α. Accordingly, the light incident on the optical waveguide 19 travels through an optical path thereof changed at a predetermined angle by the end surface 21 so that the light traveling through the changed optical path is emitted toward a desired position for irradiation while scattering. The tilt angle α is not particularly limited. For example, the tilt angle α is in the range of 35° to 55°, preferably 40° to 50°, or more specifically 45°.

As shown in FIG. 3, in the suspension board with circuit 1, the optical waveguide 19 is provided on the metal supporting board 11.

In a typical optical waveguide, an underclad layer and an overclad layer are provided with a core layer interposed therebetween. In the optical waveguide 19, however, the insulating base layer 12 serves also as the underclad layer, and the insulating cover layer 14 serves also as the overclad layer. As a result, the optical waveguide 19 is formed of the insulating base layer 12, the insulating cover layer 14, and the core layer 23 interposed therebetween.

More specifically, as shown in the right-side view of FIG. 3, the optical waveguide 19 in the linear portion includes the insulating base layer 12, the core layer 23 formed on the insulating base layer 12, and the insulating cover layer 14 formed on the insulating base layer 12 so as to cover the core layer 23.

On the other hand, as shown in the left-side view of FIG. 3, in each of the first curved portion 41, the second curved portion 42, the third curved portion 43, the fourth curved portion 44, and the fifth curved portion 45, the optical waveguide 19 includes the insulating base layer 12, the core layer 23 formed on the insulating base layer 12, a metal thin film 25 formed on the surface of the core layer 23 and on the part (a peripheral portion around the core layer 23) of the surface of the insulating base layer 12 exposed from the core layer 23, and the insulating cover layer 14 formed on the insulating base layer 12 so as to cover the metal thin film 25.

The metal thin film 25 is formed continuously and integrally on the upper surface of the core layer 23, on the both side surfaces of the core layer 23, and on the upper surface of the insulating base layer 12 slightly extending from the lower end portions of the both side surfaces of the core layer 23 toward the both widthwise outsides in the first curved portion 41, the second curved portion 42, the third curved portion 43, the fourth curved portion 44, and the fifth curved portion 45.

As shown in FIG. 6, the core layer 23 is also formed on the insulating base layer 12 even in the front-side half facing the opening 7. That is, the insulating base layer 12 and the insulating cover layer 14 face the opening 7 to be located at generally the same position when viewed in plan view in correspondence to the core layer 23.

FIGS. 4 and 5 are cross-sectional views showing the steps of producing the suspension board with circuit shown in FIG. 3, including a left-side view corresponding to a cross-sectional view of the curved portion in the wiring portion along the widthwise direction, which corresponds to the left-side view of FIG. 3, and a right-side view corresponding to an enlarged cross-sectional view in the terminal formation portion along the longitudinal direction.

Next, a description will be given to a method of producing the suspension board with circuit 1 with reference to FIGS. 4 and 5.

First, as shown in FIG. 4(a), the metal supporting board 11 is prepared in the method.

The metal supporting board 11 is formed of a metal material such as stainless steel, a 42-alloy, aluminum, a copper-beryllium alloy, or phosphor bronze. The thickness of the metal supporting board 11 is in the range of, e.g., 15 to 30 µm, or preferably 20 to 25 µm.

Then, as shown in FIG. 4(b), the insulating base layer 12 serving also as the underclad layer is formed on the metal supporting board 11.

As a resin material for forming the insulating base layer 12 serving also as the underclad layer, a resin material for forming the insulating base layer of a typical suspension board with circuit or a resin material for forming the underclad layer of a typical optical waveguide is used. Examples of such a material for forming the insulating base layer 12 include insulating materials such as a polyimide resin, a polyamide imide resin, an acrylic resin, a polyether nitrile resin, a polyether sulfone resin, a polyethylene terephthalate resin, a polyethylene naphthalate resin, and a polyvinyl chloride resin. Preferably, a polyimide resin is used. Examples of a resin material for forming the underclad layer include a polyimide resin, a polyamide resin, a silicone resin, an epoxy resin (such as an alicyclic epoxy resin), an acrylic resin, or a fluorene derivative resin, yet further, a resin mixture of a fluorene derivative resin and an alicyclic epoxy resin, and a resin mixture of any of the resins mentioned above and an alicyclic ether compound (such as, e.g., an oxetane compound) . The resin materials mentioned above are preferably used as photosensitive resins by mixing a photosensitive agent therein. Preferably, a resin mixture of a photosensitive fluorene derivative resin (using a photosensitive fluorene epoxy resin as a raw material) and an alicyclic epoxy resin is used, As a photosensitive agent, a known onium salt or the like is used, or more specifically, 4,4-bis[di(β-hydroxyethoxy)phenylsulfinio]phenylsulfide-bis-hexafluoroa ntimonate or the like is used.

To form the insulating base layer 12, e.g., a varnish of a photosensitive insulating material mentioned above is coated on the upper surface of the metal supporting board 11, dried, exposed to light via a photomask, developed, and then cured as necessary.

The refractivity of the insulating base layer 12 thus formed is in the range of, e.g., 1.500 to 1.600. The thickness of the insulating base layer 12 is in the range of, e.g., 1 to 35 µm, or preferably 6 to 15 µm.

Then, as shown in FIG. 4(c), the conductive pattern 13 is formed in the foregoing pattern on the insulating base layer 12.

To form the conductive pattern 13, a conductive material such as, e.g., copper, nickel, gold, a solder, or an alloy thereof is used.

To form the conductive pattern 13, a known patterning method such as, e.g., an additive method or a subtractive method is used. Preferably, an additive method is used.

The thickness of the conductive pattern 13 thus formed is in the range of, e.g., 3 to 50 µm, or preferably 5 to 20 µm. The width of the signal wire 15 is in the range of, e.g., 10 to 200 µm, or preferably 20 to 100 µm. The spacing between the individual signal wires 15 is in the range of, e.g., 10 to 1000 µm, or preferably 20 to 100 µm. The width of the external connection terminal portion 16 and the width of the magnetic-head-side connection terminal portion 17 are each in the range of, e.g., 20 to 1000 µm, or preferably 30 to 800 µm. The spacing between the individual external connection terminal portions 16 and the spacing between the individual magnetic-head-side connection terminal portions 17 are each in the range of, e.g., 20 to 1000 µm, or preferably 30 to 800 µm.

Then, as shown in FIG. 4(d), the core layer 23 is formed on the insulating base layer 12.

As a material for forming the core layer 23, a resin material having a refractivity higher than that of the resin material of the insulating base layer 12 is used. As an example of such a resin material, the same resin material as that used for forming the underclad layer is used. Preferably, a resin mixture of a photosensitive fluorene derivative resin (using a photosensitive fluorene epoxy resin as a raw material) and an alicyclic epoxy resin is used.

To form the core layer 23 in the foregoing pattern, e.g., a varnish of a resin mentioned above (resin solution) is prepared using a known diluent. The varnish is coated on the surface of the insulating base layer 12 including the conductive pattern 13, dried, and then cured as necessary. In the case of using a photosensitive resin, a varnish is coated, dried, exposed to light via a photomask, developed by dissolving an unexposed portion in a known organic solvent or the like, and then cured as necessary.

The refractivity of the core layer 23 thus formed is set slightly higher than the refractivity of the insulating base layer 12, and in the range of, e.g., 1.505 to 1.605. The thickness of the core layer 23 is in the range of, e.g., 1 to 30 µm, or preferably 3 to 10 µm. The width of the core layer 23 is in the range of, e.g., 1 to 30 µm, or preferably 3 to 10 µm. The radius of curvature of the curved portion is in the range of, e.g., 0.01 to 10 mm, or preferably 0.5 to 5 mm.

Then, as shown in FIG. 5(e), the metal thin film 25 is formed so as to cover the surface of the core layer 23 and the part (peripheral portion around the core layer 23) of the upper surface of the insulating base layer 12 exposed from the core layer 23 in each of the curved portions.

As an example of a metal material for forming the metal thin film 25, a metal material such as silver, aluminum, nickel, chromium, or copper is used. Preferably, copper is used because of the high light reflectance thereof.

To form the metal thin film 25, a resist in a pattern reverse to that of the metal thin film 25 is first formed, and the periphery around the portion to be formed with the metal thin film 25 is masked. Then, the metal thin film 25 is formed on the surface of the core layer 23 and on the surface of the insulating base layer 12, each exposed from the resist, by a vapor deposition method such as, e.g., a vacuum vapor deposition method, an ion plating method, or a sputtering method, or by a thin film formation method such as a plating method such as, e.g., an electrolytic plating method or an electroless plating method. Preferably, the metal thin film 25 is formed by a sputtering method.

In the sputtering method, an inert gas such as argon is introduced, and a metal material mentioned above is sputtered as a target to form the metal thin film 25.

Thereafter, the resist is removed by etching, stripping, or the like.

The thickness of the metal thin film 25 thus formed is in the range of, e.g., 0.1 to 1 µm, or preferably 0.2 to 0.5 µm. The width of the metal thin film 25 formed on the insulating base layer 12 in the peripheral portion around the core layer 23 is in the range of, e.g., 0.1 to 1 µm.

Then, as shown in FIG. 5(f), the insulating cover layer 14 serving also as the overclad layer is formed on the insulating base layer 12 to cover the conductive pattern 13, the core layer 23, and the metal thin film 25.

To form the insulating cover layer 14 serving also as the overclad layer, the resin material of an insulating cover layer used in a typical suspension board with circuit or a resin material used for the overclad layer of a typical optical waveguide is used. As such a resin material, the same resin material as that used to form the insulating base layer 12 serving also as the underclad layer mentioned above is used.

To form the insulating cover layer 14 serving also as the overclad layer, a varnish of the same material as mentioned above (resin solution) is prepared. The varnish is coated on the upper surface of the insulating base layer 12 including the conductive pattern 13 and the metal thin film 25 in each of the curved portions, while being coated on the upper surface of the insulating base layer 12 including the conductive pattern 13 and the core layer 23 on each of the linear portions, dried, exposed to light via a photomask and developed as necessary, and cured as necessary.

As a result, the insulating cover layer 14 is formed so as to expose the external connection terminal portions 16, the magnetic-head-side connection terminal portions 17, and the supply terminal portion 31, and to cover the signal wires 15, the core layer 23 (linear portions), the metal thin film 25 (curved portions), and the supply terminal portion 31.

The refractivity of the insulating cover layer 14 thus formed is set slightly lower than the refractivity of the core layer 23, and in the range of, e.g., 1.500 to 1.600. The thickness (thickness measured from the surface of the core layer 23) of the insulating cover layer 14 is in the range of, e.g., 1 to 40 µm, or preferably 5 to 12 µm.

Then, as shown in FIG. 5(g), the opening 7 is formed in the metal supporting board 11 in the terminal formation portion 10.

The opening 7 is formed by perforation such as, e.g., drilling, or by etching such as, e.g., dry etching or wet etching. Preferably, the opening 7 is formed by etching.

The opening 7 is formed to overlap the front end portion of the optical waveguide 19 in the thickness direction. More specifically, the opening 7 is formed such that the front end portion of the optical waveguide 19 is positioned at the center of the opening 7 in the widthwise direction, and disposed in the front-side half thereof in the longitudinal direction.

The opening 7 thus formed has a width in the range of, e.g., 50 to 500 µm, or preferably 100 to 200 µm, and a length (longitudinal length) in the range of, e.g., 50 to 500 µm, or preferably 100 to 200 µm.

Then, as shown in FIG. 5(h), the respective front end portions of the insulating base layer 12, the core layer 23, and the insulating cover layer 14 are cut from the side of the opening 7 by laser processing such that the end surface 21 of the front end portion of the core layer 23 intersects the longitudinal direction.

In the laser processing, a laser beam passing through the opening 7 is emitted from the side of the opening 7 (below in the thickness direction) to intersect the longitudinal direction at a predetermined angle, and irradiate the insulating base layer 12, the core layer 23, and the insulating cover layer 14, as indicated by the broken line of FIG. 5 (h) . As a result, the insulating base layer 12, the core layer 23, and the insulating cover layer 14 are simultaneously cut.

In this manner, the insulating base layer 12, the core layer 23, and the insulating cover layer 14 can be cut from the side of the opening 7 by the laser processing such that the end surface 21 of the front end portion of the core layer 23 intersects the longitudinal direction.

Thereafter, the light emitting device 20 is disposed on the insulating base layer 12 to be optically connected to the rear end of the first curved portion 41 of the core layer 23, and electrically connected to the front end of the supply wire 30 at the rear end side of the wiring portion 3, whereby the suspension board with circuit 1 is obtained.

In the suspension board with circuit 1 thus obtained, the external connection terminal portions 16 and the supply terminal portion 31 are connected to the terminal portions, not shown, on the external circuit board 2 in the wiring portion 3, as indicated by the broken lines of FIGS. 1 and 2. In the external circuit board 2, an IC 32 for controlling the magnetic head 28 (see FIG. 6) and the light emitting device 20 is mounted. The IC 32 is electrically connected via IC wires 33 to the terminal portions connected to the external connection terminal portions 16 and the supply terminal portion 31.

In the suspension board with circuit 1, the head slider 27 is mounted on the mounting portion 9 of the gimbal portion 4. On the head slider 27, the magnetic head 28 is mounted so that, by mounting the head slider 27 mentioned above, the terminal portions, not shown, of the magnetic head 28 are electrically connected to the magnetic-head-side connection terminal portions 17. Furthermore, by mounting the head slider 27 mentioned above, the magnetic head 28 is disposed in adjacent and opposing relation to the end surface 21 of the front end portion of the optical waveguide 19 so as to face the opening 7.

In such a hard disk drive in which the magnetic head 28, the head slider 27, the suspension board with circuit 1, and the external circuit board 2 are mounted, an optically assisted method can be adopted.

In the hard disk drive, e.g., the hard disk 26 moves relatively to the end surface 21 of the front end portion of the optical waveguide 19 and to the magnetic head 28. The light emitted from the light emitting device 20 passes the optical waveguide 19 to travel through the optical path changed upward and to be scattered at the end surface 21, and irradiates the surface of the hard disk 26 opposing the upper side of the end surface 21. The irradiation with the light from the end surface 21 of the optical waveguide 19 heats the surface of the hard disk 26, and in this state, information is recorded to the hard disk 26 by applying a magnetic field from the magnetic head 28 thereto. Since the coersive force of the hard disk 26 is thus reduced, the application of a small magnetic field allows high-density recording of information to the hard disk 26.

In the suspension board with circuit 1, the optical waveguide 19 used in the optically assisted method can be formed with a higher spatial margin than that in the head slider 27 formed to be smaller than the suspension board with circuit 1.

In particular, since the core layer 23 is provided on the insulating base layer 12 having a higher spatial margin than that of the head slider 27, it is possible to ensure design flexibility, improve production efficiency, and also reduce production cost.

Additionally, in the suspension board with circuit 1, the insulating base layer 12 serves also as the underclad layer, the insulating cover layer 14 serves also as the overclad layer, and the conductive pattern 13 and the core layer 23 is covered with the insulating cover layer 14 on the upper surface of the insulating base layer 12.

As a result, it is possible to reduce the thickness of the suspension board with circuit 1, simplify the structure thereof, reduce the number of production steps, improve production efficiency, and reduce cost.

Moreover, since the respective surfaces of the five curved portions, i.e. , the first curved portion 41, the second curved portion 42, the third curved portion 43, the fourth curved portion 44, and the fifth curved portion 45 are covered with the metal thin film 25, an optical signal is reflected by the metal thin film 25 in each of the curved portions and transmitted along each of the curved portions, while being confined in the core layer 23. As a result, it is possible to prevent the leakage of the optical signal in each of the curved portions and transmit the optical signal in an amount of light necessary for the optically assisted method.

In the description given above, the metal thin film 25 is formed on the upper surface and the both side surfaces of the core layer 23 in each of the curved portions. However, the metal thin film 25 can also be formed, e.g., on the lower surface of the core layer 23 in addition to on the upper surface and the both side surfaces of the core layer 23, though not shown. The formation of the metal thin film 25 on the upper surface, the both side surfaces, and the lower surface of the core layer 23 allows efficient confinement of the light to the core layer 23. Preferably, the metal thin film 25 is formed on the upper surface and the both side surfaces of the core layer 23 in terms of ease of production (e.g., a thin-film formation method such as sputtering) of the metal thin film 25.

In the description given above, the metal thin film 25 is formed on the surface of the insulating base layer 12 in the peripheral portion around the core layer 23. However, the metal thin film 25 can also be formed, e.g., only on the upper surface and the both side surfaces of the core layer 23 without being formed on the surface of the insulating base layer 12 in the peripheral portion around the core layer 23, though not shown. Preferably, the metal thin film 25 is formed also on the surface of the insulating base layer 12 in the peripheral portion around the core layer 23 in terms of reliably covering the surface of the core layer 23, especially the both side surfaces thereof, with the metal thin film 25.

The shape of each of the curved portions of the core layer 23 is not particularly limited. For example, each of the curved portions can also be formed in an appropriate curved shape such as a U-shape other than the L-shape and the S-shape mentioned above.

In the description given above, the opening 7 is formed at the widthwise center of the gimbal portion 4. However, the placement of the opening 7 is not limited thereto. For example, the opening 7 can also be formed in one widthwise end portion or the other widthwise end portion. Preferably, the opening 7 is formed at the widthwise center of the gimbal portion 4 such that the widthwise center portion of the head slider 27 and the front end portion of the optical waveguide 19 are disposed in opposing relation in the longitudinal direction.

FIG. 7 is a cross-sectional view of the curved portion in the wiring portion of the suspension board with circuit shown in FIG. 1 along the widthwise direction, which is a cross-sectional view of an embodiment in which the optical waveguide is provided on the insulating base layer. FIGS. 8 and 9 are cross-sectional views showing the steps of producing the suspension board with circuit shown in FIG. 7, each including a left-side view corresponding to a cross-sectional view of the curved portion in the wiring portion along the widthwise direction, which corresponds to FIG. 7, and a right-side view corresponding to an enlarged cross-sectional view in the terminal formation portion along the longitudinal direction. The members corresponding to the individual components described above are provided with the same reference numerals in each of the subsequent drawings, and a detailed description thereof is omitted.

In the description given above, the insulating base layer 12 is used also as the underclad layer without providing an independent underclad layer, and the insulating cover layer 14 is used also as the overclad layer without providing an independent overclad layer. However, as shown in FIG. 7, it is also possible to, e.g., provide an underclad layer 22 independent of the insulating base layer 12, and provide an overclad layer 24 independent of the insulating cover layer 14.

As shown in FIG. 7, in the first curved portion 41, the second curved portion 42, the third curved portion 43, the fourth curved portion 44, and the fifth curved portion 45, the optical waveguide 19 includes the underclad layer 22, the core layer 23 formed on the underclad layer 22, the metal thin film 25 formed on the upper surface and the both side surfaces of the core layer 23 and on the upper surface of the underclad layer 22 in the peripheral portion around the core layer 23, and the overclad layer 24 formed on the underclad layer 22 so as to cover the metal thin film 25. In the linear portion, the optical waveguide 19 includes the underclad layer 22, the core layer 23 formed on the underclad layer 22, and the overclad layer 24 formed on the underclad layer 22 so as to cover the core layer 23, though not shown.

The insulating cover layer 14 is disposed on the insulating base layer 12 to ensure the region formed with the optical waveguide 19. More specifically, the insulating cover layer 14 is disposed on the insulating base layer 12 so as to expose the region of the insulating base layer 12 on one widthwise side thereof.

The underclad layer 22 is disposed on the insulating base layer 12 to be spaced apart from and adjacent to the insulating cover layer 14 on one widthwise side of the insulating cover layer 14.

The overclad layer 24 is formed such that the both widthwise outer end edges thereof are at the same positions as the both widthwise outer end edges of the underclad layer 22 when viewed in plan view.

Next, a description will be given to a method of producing the suspension board with circuit 1 with reference to FIGS. 8 and 9.

First, as shown in FIG. 8(a), the metal supporting board 11 is prepared in the method.

Then, as shown in FIG. 8(b), the insulating base layer 12, the conductive pattern 13, and the insulating cover layer 14 are laminated in this order on the metal supporting board 11.

Then, as shown in FIG. 8(c), the underclad layer 22 is formed on the insulating base layer 12. As a resin material for forming the underclad layer 22, the same resin material as mentioned above is used.

To form the underclad layer 22 in the foregoing pattern, e.g., a varnish of a resin mentioned above (resin solution) is prepared using a known diluent. The varnish is coated on the surface of the insulating base layer 12, dried, and then cured as necessary.

The refractivity of the underclad layer 22 thus formed is in the range of, e.g., 1.45 to 1.55. The thickness of the underclad layer 22 is in the range of, e.g., 1 to 50 µm, or preferably 5 to 20 µm. The width of the underclad layer 22 is in the range of, e.g., 20 to 200 µm, or preferably 30 to 100 µm.

Then, as shown in FIG. 8(d), the core layer 23 is formed on the underclad layer 22. As a material for forming the core layer 23, the same resin material as mentioned above is used.

To form the core layer 23 in the foregoing pattern, e.g., a varnish of a resin mentioned above (resin solution) is prepared using a known diluent. The varnish is coated on the surface of the insulating base layer 12 including the underclad layer 22 and the insulating cover layer 14, dried, and then cured as necessary.

Then, as shown in FIG. 9(e), the metal thin film 25 is formed so as to cover the surface of the core layer 23 and the part (peripheral portion around the core layer 23) of the upper surface of the underclad layer 22 exposed from the core layer 23 in each of the curved portions.

As a metal material for forming the metal thin film 25, the same metal material as mentioned above is used.

To form the metal thin film 25, a resist in a pattern reverse to that of the metal thin film 25 is formed first to mask the periphery around the portion to be formed with the metal thin film 25. Then, by the thin-film formation method described above, the metal thin film 25 is formed on the surface of the core layer 23 and the surface of the underclad layer 22, each exposed from the resist.

Then, as shown in FIG. 9(f), the overclad layer 24 is formed on the underclad layer 22 so as to cover the core layer 23 and the metal thin film 25.

As a resin material for forming the overclad layer 24, the same resin material as mentioned above is used.

To form the overclad layer 24, a varnish of the same resin material as mentioned above (resin solution) is prepared. The varnish is coated on the upper surface of the insulating base layer 12 including the insulating cover layer 14 and the metal thin film 25 in the curved portion, while being coated on the upper surface of the insulating base layer 12 including the insulating cover layer 14 and the core layer 23 in the linear portion, dried, exposed to light via a photomask and developed as necessary, and cured as necessary.

Then, as shown in FIG. 9(g), the opening 7 is formed in the metal supporting board 11 in the terminal formation portion 10.

Then, as shown in FIG. 9(h), the front end portions of the insulating base layer 12 and the optical waveguide 19 are cut from the side of the opening 7 by laser processing such that the end surface 21 of the front end portion of the optical waveguide 19 intersects the longitudinal direction.

In this manner, the suspension board with circuit 1 can be produced.

In the suspension board with circuit 1 thus formed, the underclad layer 22 and the overclad layer 24 are provided so that the refractivities of the insulating base layer 12 and the insulating cover layer 14 need not be set lower than that of the core layer 23. As a result, it is possible to increase options in selecting resin materials for the insulating base layer 12 and the insulating cover layer 14.

FIG. 10 is a cross-sectional view of the curved portion in the wiring portion of the suspension board with circuit shown in FIG. 1 along the widthwise direction, which is a cross-sectional view of an embodiment in which the optical waveguide is provided on the insulating cover layer. FIGS. 11 and 12 are cross-sectional views showing the steps of producing the suspension board with circuit shown in FIG. 10, each including a left-side view corresponding to a cross-sectional view of the curved portion in the wiring portion along the widthwise direction, which corresponds to FIG. 10, and a right-side view corresponding to an enlarged cross-sectional view in the terminal formation portion along the longitudinal direction.

In the description given above, the optical waveguide 19 is provided on the insulating base layer 12. However, the optical waveguide 19 can also be formed on, e.g., the insulating cover layer 14.

In FIG. 10, in the suspension board with circuit 1, the insulating cover layer 14 is formed such that the peripheral end edges thereof are at generally the same positions as the peripheral end edges of the insulating base layer 12 when viewed in plan view.

The optical waveguide 19 is formed over the signal wire 15 (more specifically, the first wire 15a) in the wiring portion 3 and in the outrigger portion 8 of the gimbal portion 4. The core layer 23 of the optical waveguide 19 is formed to overlap the first wire 15a in the wiring portion 3 and in the outrigger portion 8 of the gimbal portion 4 when viewed in plan view.

On the other hand, the optical waveguide 19 is formed on the insulating cover layer 14 in the terminal formation portion 10 of the gimbal portion 4, and disposed to be displaced from the first wire 15a in the terminal formation portion 10 toward the other widthwise side. More specifically, the optical waveguide 19 is disposed to extend in parallel and spaced-apart relation to the first wire 15a. That is, in the terminal formation portion 10, the optical waveguide 19 is disposed to extend along the center of the terminal formation portion 10 and reach the opening 7.

The light emitting device 20 is formed on the insulating cover layer 14.

To produce the suspension board with circuit 1, the metal supporting board 11 is prepared first, as shown in FIG. 11(a). Then, as shown in FIG. 11(b), the insulating base layer 12, the conductive pattern 13, and the insulating cover layer 14 are laminated in this order on the metal supporting board 11. Then, as shown in FIG. 11(c), the underclad layer 22 is formed on the insulating cover layer 14. Then, as shown in FIG. 11(d), the core layer 23 is formed on the underclad layer 22. Then, as shown in FIG. 11(e), the metal thin film 25 is formed so as to cover the surface of the core layer 23 and the part (peripheral portion around the core layer 23) of the upper surface of the underclad layer 22 exposed from the core layer 23 in each of the curved portions. Then, as shown in FIG. 12 (f), the overclad layer 24 is formed on the underclad layer 22 so as to cover the core layer 23 and the metal thin film 25. Then, as shown in FIG. 12(g), the opening 7 is formed in the metal supporting board 11 in the terminal formation portion 10. Then, as shown in FIG. 12(h), the insulating base layer 12, the insulating cover layer 14, and the optical waveguide 19 are cut from the side of the opening 7 by laser processing such that the end surface 21 of the front end portion of the optical waveguide 19 intersects the longitudinal direction. In this manner, the suspension board with circuit 1 can be produced.

By thus forming the optical waveguide 19 on the insulating cover layer 14, it is possible to ensure design flexibility for the optical waveguide 19 even when the insulating base layer 12 does not have enough spatial margin, improve production efficiency, and also reduce production cost.

In the description given above, the optical waveguide 19 is provided on one widthwise side of the first wire 15a. However, the placement of the optical waveguide 19 is not limited thereto. For example, the optical waveguide 19 can be provided on the other widthwise side of the fourth wire 15d, though not shown. Otherwise, the optical waveguide 19 can also be provided on the opposite side of the second wire 15a with respect to the first wire 15a (i.e., on the opposite side of the third wire 15d with respect to the fourth wire 15d), between the first wire 15a and the second wire 15b, or between the third wire 15c and the fourth wire 15d. Preferably, the optical waveguide 19 is provided on one widthwise side of the first wire 15a or on the other widthwise side of the fourth wire 15d in terms of space, and in terms of disposing the front end portion of the optical waveguide 19 at the widthwise center of the gimbal portion 4.

In the description given above, a single optical waveguide 19 is provided in the suspension board with circuit 1, but the number of the optical waveguides 19 is not particularly limited. For example, a plurality of the optical waveguides 19 can also be provided depending on the application and purpose of the suspension board with circuit 1.

In the description given above, the overclad layer 24 or the insulating cover layer 14 is provided so as to cover the core layer 23. However, it is also possible to provide a so-called air clad by exposing the core layer 23, i.e., exposing the core layer 23 to air without providing the overclad layer 24 or the insulating cover layer 14. Preferably, the overclad layer 24 or the insulating cover layer 14 is provided in terms of preventing damage to the core layer 23 caused by an external factor.

### EXAMPLES

The present invention is described more specifically by showing the example and the comparative example hereinbelow. However, the present invention is by no means limited to the example and the comparative example. EXAMPLE 1 (Embodiment in which Metal Thin Film is Formed in Curved Portions)

A metal supporting board made of stainless steel having a thickness of 20 µm was prepared (see FIG. 4(a)).

Next, an insulating base layer made of a polyimide resin was formed in the foregoing pattern on the metal supporting board (see FIG. 4(b). The refractivity of the insulating base layer at a wavelength of 830 nm was 1.532. The thickness of the insulating base layer was 6 µm.

Next, a conductive pattern, a supply wire, and a supply terminal portion, each made of copper, were simultaneously formed on the insulating base layer by an additive method (see FIG. 4(c)). The thickness of each was 10 µm.

Next, a core layer having a first curved portion, a second curved portion, a third curved portion, a fourth curved portion, and a fifth curved portion was formed on the insulating base layer.

To form the core layer in the foregoing pattern, a varnish was prepared first by mixing 30 parts by weight of bisphenoxy-ethanol fluorene diglycidyl ether (fluorene derivative having an epoxy equivalent of 300 g/eq.), 70 parts by weight of an adduct of 1,2-epoxy-4-(2-oxylanyl)cyclohexane of 2,2' -bis (hydroxymethyl) -1-butanol (alicyclic epoxy resin, EHPE 3150 available from Daicel Chemical Industries Co., Ltd.), 0.5 parts by weight of a 50% propione carbonate solution containing 4,4-bis[di(β-hydroxyethoxy)phenylsulfinio] phenylsulfide-bis-hexafluoroantimonate (photosensitive agent), and 28 parts by weight of ethyl lactate (diluent) . Then, the varnish was coated on the surface of the insulating base layer including the conductive pattern, and dried by heating at 80°C for 15 minutes. Subsequently, the coating was exposed to light via a photomask, and developed by dissolving an unexposed portion in a γ-butyrolactone organic solvent. Thereafter, the coating was cured by heating at 100°C for 15 minutes to form the core layer on the insulating base layer (see FIG. 4(d)).

The refractivity of the core layer (cured core layer) at a wavelength of 830 nm was 1.535. The thickness of the core layer was 5 µm. The width of the core layer was 5 µm. The radius of curvature of the first curved portion was 5 mm. The radius of curvature of each of the second curved portion and the third curved portion was 10 mm. The radius of curvature of each of the fourth curved portion and the fifth curved portion was 2.5 mm.

Next, a metal thin film was formed so as to cover the surface of the core layer and the part (peripheral portion around the core layer) of the upper surface of the insulating base layer exposed from the core layer in the curved portions.

To form the metal thin film, a resist in a pattern reverse to that of the metal thin film was formed first to mask the periphery around the portion to be formed with the metal thin film. Thereafter, by silver sputtering, the metal thin film made of silver and having a thickness of 0.15 µm was formed on the surface of the core layer and the surface of the insulating base layer, each exposed from the resist. Thereafter, the resist was removed by etching (see FIG. 5(e)).

Next, an insulating cover layer was formed in the foregoing pattern on the insulating base layer so as to cover the conductive pattern, the core layer, and the metal thin film.

To form the insulating cover layer in the foregoing pattern, a varnish was prepared first by mixing 30 parts by weight of bisphenoxy-ethanol fluorene diglycidyl ether (fluorene derivative having an epoxy equivalent of 300 g/eq.), 45 parts by weight of (3,4-epoxycyclohexane)methyl 3',4'-epoxycyclohexyl-carboxylate, 25 parts by weight of an alicyclic epoxy resin having a cyclohexene oxide skeleton (Celoxide 2081 available from Daicel Chemical Industries Co., Ltd.), and 1 part by weight of a 50% propione carbonate solution containing 4,4-bis[di(β-hydroxyethoxy)phenylsulfinio] phenylsulfide-bis-hexafluoroantimonate (photosensitive agent). Then, the varnish was coated on the surface of the insulating base layer including the conductive pattern, the core layer, and the metal thin film, and dried by heating at 80°C for 15 minutes. Subsequently, the coating was exposed to light via a photomask, and developed by dissolving an unexposed portion in a γ-butyrolactone organic solvent. Thereafter, the coating was cured by heating at 100°C for 15 minutes to form the insulating cover layer on the insulating base layer so as to expose external connection terminal portions, magnetic-head-side connection terminal portions, and a supply terminal portion, and to cover signal wires, the core layer, the metal thin film, and the supply terminal portion (see FIG. 5(f)).

The refractivity of the insulating cover layer at a wavelength of 830 nm was 1.532. The thickness of the insulating cover layer (thickness measured from the surface of the core layer) was 10 µm.

Next, an opening having a rectangular shape when viewed in plan view was formed in the metal supporting board in a terminal formation portion by wet etching (see FIG. 5(g)). The width of the opening was 100 µm. The length of the opening was 100 µm.

Next, the insulating base layer, the core layer, and the insulating cover layer were simultaneously cut from the side of the opening by laser processing (see FIG. 5(h)). The tilt angle of an end surface formed by the cutting was 45°.

Thereafter, a light emitting device was disposed on the insulating base layer to be optically connected to the rear end of an optical waveguide and electrically connected to the front end of the supply wire at the rear end side of the wiring portion of the suspension board with circuit.

### COMPARATIVE EXAMPLE 1 (Embodiment in which Metal Thin Film is Not Formed in Curved Portions)

A suspension board with circuit was obtained by performing the same process as in EXAMPLE 1 except that a metal thin film was not formed on any of the curved portions of the core layer, and a light emitting device was disposed thereon.

That is, the insulating cover layer was formed in the foregoing pattern on the insulating base layer so as to cover the conductive pattern and the core layer.

### EVALUATION

### (Light Leakage)

The light emitting device was operated to emit light on each of the suspension boards with circuit obtained in EXAMPLE 1 and COMPARATIVE EXAMPLE 1.

In EXAMPLE 1, a sufficient amount of light for use in an optically assisted method was emitted from the end surface of the front end of the core layer.

By contrast, in COMPARATIVE EXAMPLE 1, the amount of light emitted from the end surface of the front end of the core layer was not sufficient, and the light could not be used in the optically assisted method.

## Claims

1. A suspension board with circuit comprising:
a metal supporting board;
an insulating base layer formed on the metal supporting board;
a conductive pattern formed on the insulating base layer;
an insulating cover layer formed on the insulating base layer so as to cover the conductive pattern; and
an optical waveguide including a core layer having a curved portion and a metal thin film covering a surface of the curved portion.

2. The suspension board with circuit according to Claim 1, wherein the metal thin film covers an upper surface and a side surface of the curved portion.

3. The suspension board with circuit according to Claim 1, wherein the metal thin film is made of silver.
